# EUROPEAN PATENT SPECIFICATION

(11) **EP 2 960 112 B1**
(45) Date of publication and mention of the grant of the patent: **06.06.2018**
(21) Application number: 15171860.8
(22) Date of filing: 12.06.2015
(51) Int. Cl.: B60R 7/02, B60R 11/06, A47B 81/00

(54) **STORAGE ASSEMBLY**
SPEICHERANORDNUNG
ENSEMBLE DE STOCKAGE

(30) Priority: 26.06.2014 GB 201411356
(43) Date of publication of application: 30.12.2015
(73) Proprietor: Bri-Stor Systems Ltd., Stafford ST18 0PS (GB)
(72) Inventor: Humphrey, Andrew Paul, Stafford, GB ST18 0PS (GB)
(74) Representative: Sales, Robert Reginald

(56) References cited:
- CN-U- 202 980 984
- US-A1- 2005 225 108
- US-A1- 2012 126 575
- US-A1- 2013 134 733

## Description

This invention concerns a van incorporating a storage assembly.

Vans are used in a very wide range of applications. For instance many builders, workmen, tradesmen and technicians require vans to store and accessibly carry a range of items.

Traditionally many items and materials have been carried on the outside of vans and particularly on roof racks. This can however lead to materials potentially becoming wet and/or dirty.

With some materials such as for instance copper pipe, due to the increase in metal prices, such materials have become prey to theft when left on the outside of vans. Lengths of copper pipe and other elongate products are often supplied for instance in three metre lengths which can prove problematic to carry inside many vans.

US2005102251 08A1 discloses a van incorporating storage assembly units secured to a wall in a van, the assembly having a rectangular shape with convex shaped shelves/doors in plan view with the front and rear ends in use substantially parallel to each other, the storage assembly is mountable in the load area of a van so as to extend rearwardly from substantially adjacent the bulkhead of the van, and the storage assembly may extend for at least substantially the majority of the length of the load area of the van.

According to a first aspect of the invention there is provided 2 a van incorporating a storage assembly having a profile in plan view which in use tapers towards the rear of the vehicle.

The storage assembly may have a trapezoidal shape in plan view, with the front and rear ends in use substantially parallel to each other.

The storage assembly may be mountable in the load area of a van so as to extend rearwardly from substantially adjacent the bulkhead of the van. The storage assembly may in use extend for at least substantially the majority of the length of the load area of the van.

The storage assembly may include a first side which in use extends adjacent to and parallel to a side wall of the van, and a second side wall which converges rearwardly towards the first side wall.

The storage assembly may include a plurality of shelf arrangements. The storage assembly may include a plurality of spaced uprights mountable to the floor of the van. Respective pairs of spaced uprights may be provided at the front end and rear ends in use of the storage assembly. One or more pairs of spaced uprights may also be provided intermediate of the front and rear ends of the assembly.

The shelf arrangements may selectively mount a plurality of storage boxes, and may include dividers to securely locate storage boxes.

The shelf arrangements may mount one or more drawer assemblies.

The shelf assembly may be mountable in a van with the first side adjacent the offside of the van. The shelf assembly may be arranged such that a part of the storage assembly can be accessed through a door in the offside of the van.

An end panel may be provided on the rear end in use of the storage assembly, and storage components may be mountable on the end panel.

The second side of the storage assembly may provide a face against which sheets of material may lean, and securing means may be provided for retaining the sheets against the second side.

The storage assembly may include an elongate holder defining an elongate space for receiving elongate items. The elongate holder may in use extend diagonally across the load area of a van. The elongate holder may be provided at a lower part of the storage assembly. The elongate holder may extend through the van bulkhead and may extend at least partially beneath the passenger seat or seats of the van.

The elongate holder may extend in use from adjacent the rear offside corner of the van, and the elongate holder may extend through the storage assembly end panel. A selectively openable closure may be provided on the rear end of the elongate holder to retain elongate items therein. A window may be provided part way along the elongate holder to enable any items held therein to be viewed.

The elongate holder may extend substantially parallel to the second side of the storage assembly.

The van may include a nearside door opening into the load area thereof.

The van may include an offside door opening into the load area thereof.

Embodiments of the present invention will now be described by way of example only and with reference to the accompanying drawings, in which:-
Fig. 1 is a diagrammatic plan view of a first storage assembly according to the invention;
Fig. 2 is a diagrammatic rear perspective view of the assembly of Fig. 1;
Fig. 3 is a diagrammatic first side view of the assembly of Fig. 1;
Fig. 4 is a diagrammatic rear view of the assembly of Fig. 1;
Fig. 5 is a diagrammatic part cut away plan view of the assembly of Fig. 1 fitted in a van;
Fig. 6 is a diagrammatic part cut away rear perspective view of the assembly of Fig. 1 fitted in a van;
Fig. 7 is a diagrammatic part cut away first side view of the assembly of Fig. 1 fitted in a van;
Fig. 8 is a diagrammatic part cut away rear view of the assembly of Fig. 1 fitted in a van;
Fig. 9 is a similar view to Fig. 6 but incorporating additional elements;
Fig. 10 is a diagrammatic partially cut away second side view of the arrangement shown in Fig. 9; and
Fig. 11 is a similar view to Fig. 6 but of a second arrangement.

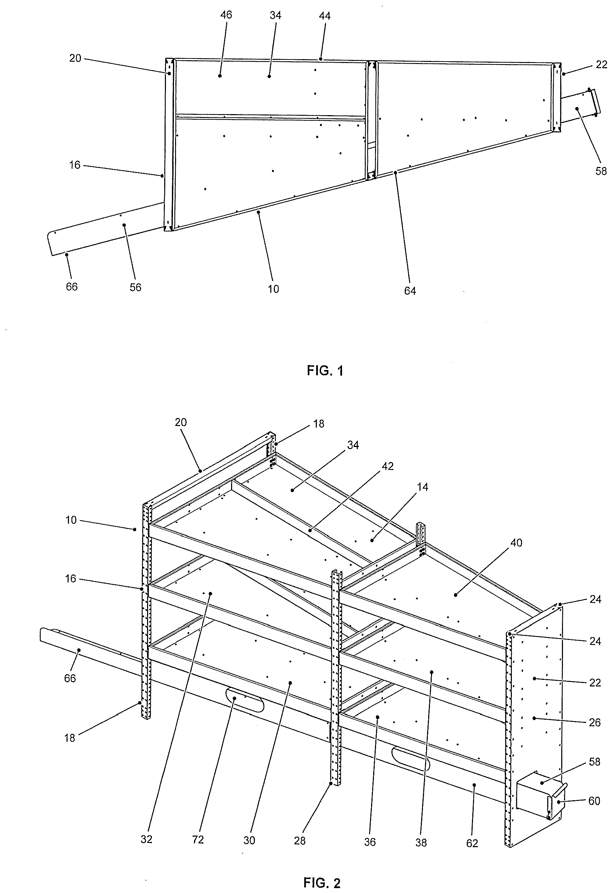

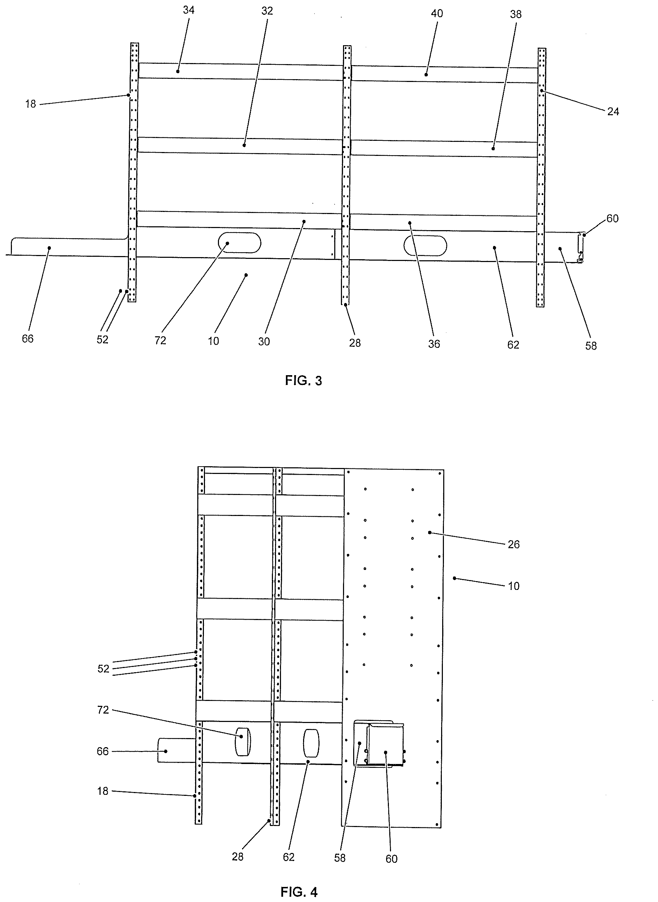

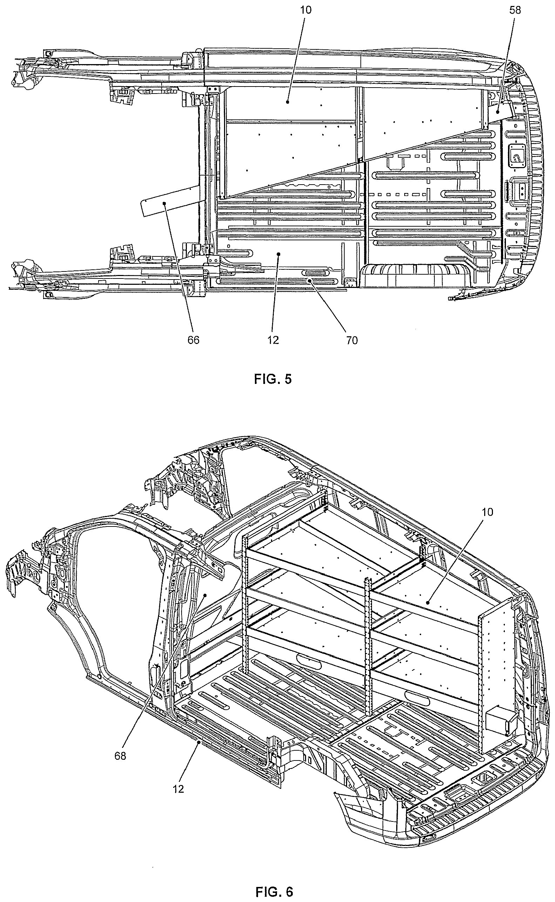

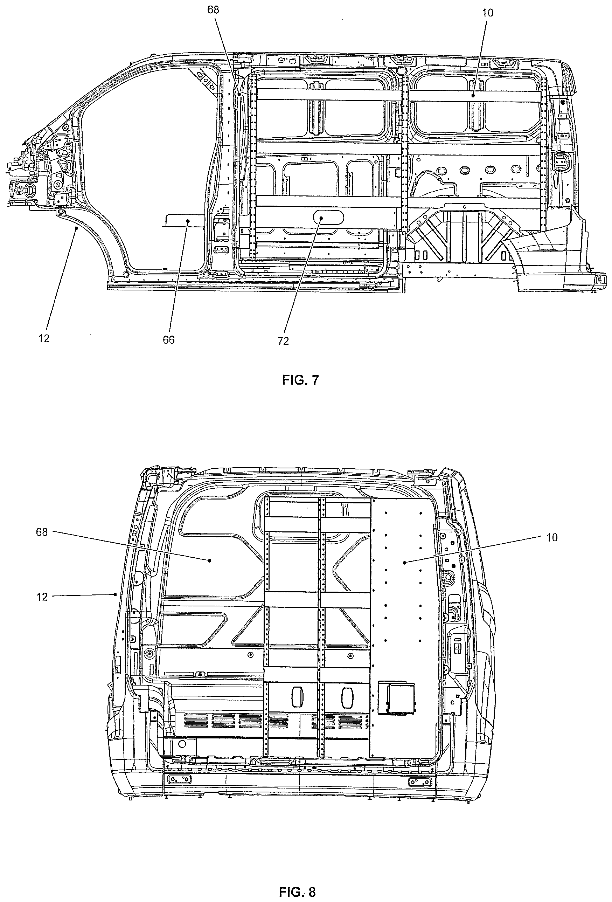

Figs. 1 to 10 show a first storage assembly 10 mountable in a van 12 part only of which has been shown for clarity in Figs. 5 to 10. The assembly 10 has a main part 14 which is substantially trapezoidal in plan view and comprises a front end 16 with a spaced pair of uprights 18 interconnected by a top crossbar 20 and one or more further crossbars which are not visible in the drawings.

The assembly 10 has a rear end 22 with a pair of spaced uprights 24 with a plate 26 extending therebetween. The rear end 22 is significantly narrower than the front end 16, but extends parallel thereto, thereby defining the trapezoidal shape. An intermediate pair of uprights 28 are provided midway between the front and rear ends 16, 22, and one or more crossbars (not shown) may be provided between the intermediate uprights 28 as required.

Three sets of shelves 30, 32, 34 one above each other are provided respectively between the front end 16 and the intermediate uprights 28 one above each other. Three further shelves 36, 38, 40 are provided extending between the intermediate uprights 28 and the rear end 22, again one above each other. All of the shelves 30 - 40 are trapezoidal in plan view to maintain the overall trapezoidal shape of the assembly 10.

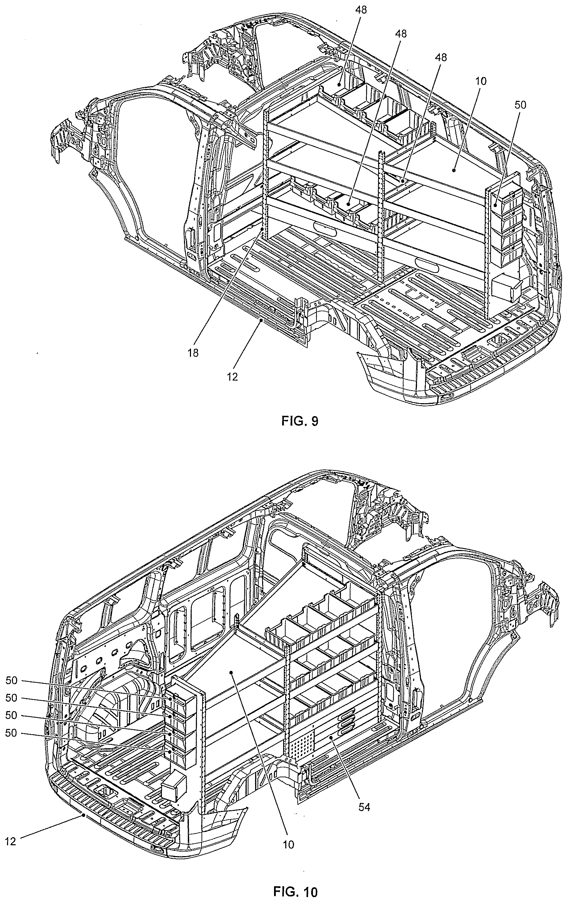

The uppermost two shelves 32, 34 between the front end 16 and the intermediate uprights 28 have a divider 42 parallel to their first side 44 on the offside of the van which defines a rectangular space 46 which can receive a number of storage bins 48 as shown for example in Figs. 9 and 10. Further storage bins 50 may be mounted on the rear end plate 26 as shown in Figs. 9 and 10.

All of the uprights 18, 24, 28 have a plurality of mounting holes 52 along their length such that the shelves 30 - 40 can be mounted at different heights as required for storage of different sized items.

As shown in Fig. 10 a set of drawers 54 may be mounted between the lower shelve 30 and the van floor, and these could be accessed through an offside side door of the van 10, as could the shelves 30, 32, 34 thereabove.

An elongate holder 56 is also provided. The holder 56 comprises a square section extension 58 coming out of the rear end plate 26 with a closable flap 60. This extends into a box section 62 which extends below the lower shelves 30, 36 and parallel to the second side 64 of the assembly 10 away from the offside of the van. The box section 62 extends into a further length of L-shape section 66 which extends through the van bulkhead 68 to locate beneath the passenger seat or seats of the van.

The storage assembly 10 can be mounted to the floor of the van 12 by any appropriate means, and particular brackets may be provided so that the assembly can be mounted to standard fixing points on the van 12. Fixings may be provided at the upper ends of the uprights 18, 24, 28 which connect to the van roof.

The storage assembly 10 provides ready access through a nearside opening 70 which would be provided with a door conventionally in a van. Where an offside door is provided this can also provide ready access to the assembly 10 as described above, and particularly in relation to Fig. 10. The trapezoidal shape permits ready access to all of the storage assembly 10 either through a nearside door or the rear door or doors of the van.

The elongate holder 54 allows elongate items such as lengths of copper pipe to readily be carried and stored clear of other items. A window 72 is provided part way along the box section 62 to enable a clear indication to be provided as to whether anything is located in the elongate holder 56. The storage assembly 10 is also very suited to carry sheets of material such as plasterboard or plywood which typically would come in sheets with a dimension along the lines of 1.2 x 2.4 metres. Restraining arrangements such as straps or brackets may be provided on the uprights 18, 24 and/or 28 particularly at their upper ends to retain such sheets in position.

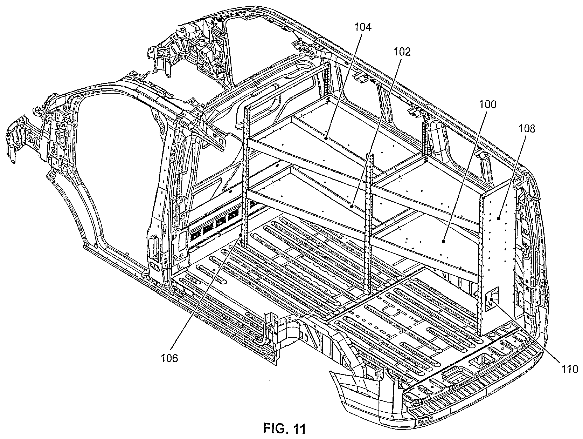

Fig. 11 shows a second storage assembly 100 which is similar in most respects to the storage assembly 10, and only the differences will be highighted. In this instance only two shelves 102, 104 are provided, again mounted between respective pairs of uprights 106. A rear plate 108 is provided. In this instance an opening 110 is provided at a lower end of the rear plate 108, and elongate members can simply extend therethrough for their forward ends to lie on the floor, or potentially to extend through a hole in the bulkhead.

There are thus described storage assemblies which make for very efficient and accessible use of the load area of a van. The assemblies can be inexpensively and robustly manufactured, and can be produced in a wide range of variations and/or adjustments for use in a wide range of applications and to hold and store a range of different items.

Different storage containers or otherwise can be held or mounted on the storage assembly if required. A different number and/or type of shelves may be provided.

## Claims

1. A van (12) incorporating a storage assembly (10) mounted in the van (12), the assembly (10) having a trapezoidal shape in plan view, with the front and rear ends (16, 22) in use substantially parallel to each other, the storage assembly being mounted in the load area of the van (12) so as to extend rearwardly from substantially adjacent the bulkhead (68) of the van (12) with the storage assembly extending for at least substantially the majority of the length of the load area of the van (12).

2. A van (12) according to claim 1, in which the storage assembly (10) includes a first side which in use extends adjacent to and parallel to a side wall of the van (12), and a second side wall which converges rearwardly towards the first side wall, in which the storage assembly is mountable in a van (12) with the first side adjacent the offside of the van, and in which the storage assembly is arranged such that a part of the storage assembly can be accessed through a door in the offside of the van.

3. A van (12) according to claim 2, in which the second side of the storage assembly provides a face against which sheets of material may lean, and securing means may be provided for retaining the sheets against the second side of the storage assembly.

4. A van (12) according to any of the preceding claims, in which the storage assembly includes a plurality of spaced uprights (18, 24, 28) mountable to the floor of the van (12), in which respective pairs of spaced uprights (18, 24, 28) are provided at the front end and rear ends in use of the storage assembly 10, and in which one or more pairs of spaced uprights (18, 24, 28) are provided intermediate of the front and rear ends of the assembly (10).

5. A van (12) according to any of the preceding claims, in which the storage assembly (10) includes a plurality of shelf arrangements (30, 32, 34), in which the shelf arrangements may selectively mount a plurality of storage boxes (48), in which the shelf arrangements (30, 32, 34) may include dividers to securely locate storage boxes (48), and in which the shelf arrangements (30, 32, 34) may mount one or more drawer assemblies (54).

6. A van (12) according to any of the preceding claims, in which an end panel (26) is provided on the rear end of the storage assembly (10), and in which storage components may be mountable on the end panel.

7. A van (12) according to any of the preceding claims, in which the storage assembly (10) includes an elongate holder (56) defining an elongate space for receiving elongate items, and in which the elongate holder (56) extends substantially parallel to a second side of the storage assembly which converges rearwardly towards a first side wall of the storage assembly.

8. A van (12) according to claim 7, in which the elongate holder (56) extends diagonally across the load area of the van.

9. A van (12) according to claims 7 or 8, in which the elongate holder (56) is provided at a lower part of the storage assembly (10), in which the elongate holder (56) may extend through the van bulkhead (68), in which the elongate holder (56) may extend at least partially beneath the passenger seat or seats of the van.

10. A van (12) according to claim 7, in which the elongate holder (56) extends from adjacent the rear offside corner of the van.

11. A van (12) according to any of claims 7 to 10, when dependent on claim 6, in which the elongate holder extends (56) through the storage assembly end panel (26).

12. A van (12) according to any of claims 7 to 11, in which a selectively openable closure (60) is provided on the rear end of the elongate holder to retain elongate items therein.

13. A van (12) according to any of claims 7 to 12, in which a window (72) is provided part way along the elongate holder (56) to enable any items held therein to be viewed.

14. A van (12) according to any of the preceding claims, in which the van (12) includes a nearside door opening (70) into the load area thereof.

15. A van (12) according to any of the preceding claims, in which the van (12) includes an offside door opening into the load area thereof.

## Patentansprüche

1. Transporter (12) aufweisend eine in den Transporter (12) eingebaute Lageranordnung (10), wobei die Anordnung (10) in der Draufsicht eine Trapezoidform hat, mit vorderen und hinteren Enden (16, 22) im Gebrauch im Wesentlichen parallel zueinander, wobei die Lageranordnung im Ladebereich des Transporters (12) so montierbar ist, dass sie sich von im Wesentlichen neben der Trennwand (68) des Transporters (12) nach hinten erstreckt, und sich die Lageranordnung zumindest im Wesentlichen über den größten Teil der Länge des Ladebereichs des Transporters (12) erstreckt.

2. Transporter (12) nach Anspruch 1, wobei die Lageranordnung (10) eine erste Seite aufweist, die sich im Gebrauch angrenzend an und parallel zu einer Seitenwand des Transporters (12) erstreckt, und eine zweite Seitenwand, die nach hinten zu der ersten Seitenwand hin zusammenläuft, wobei die Lageranordnung in dem Transporter (12) montierbar ist mit einer ersten an die Fahrerseite des Transporters angrenzenden Seite, und wobei die Lageranordnung so angeordnet ist, dass ein Teil der Lageranordnung durch eine Türe auf der Fahrerseite des Transporters zugänglich ist.

3. Transporter (12) nach Anspruch 2, wobei die zweite Seite eine Fläche bereitstellt, gegen die sich Materialschichten stützen können, und Befestigungsmittel vorgesehen sein können, um die Schichten an die zweite Seite der Lageranordnung zu fixieren.

4. Transporter (12) nach einem der vorhergehenden Ansprüche, wobei die Lageranordnung eine Vielzahl von auf dem Boden des Transporters (12) beabstandeten Pfosten (18, 24, 28) aufweist, wobei im Gebrauch entsprechende Paare von beabstandeten Pfosten (18, 24, 28) am vorderen Ende und am hinteren Ende der Lageranordnung (10) vorgesehen sind, und wobei ein oder mehrere Paare der beabstandeten Pfosten (18, 24, 28) zwischen dem vorderen Ende und dem hinteren Ende der Lageranordnung (10) vorgesehen sind.

5. Transporter (12) nach einem der vorhergehenden Ansprüche, wobei die Lageranordnung (10) eine Vielzahl an Regaleinrichtungen (30, 32, 34) aufweist, wobei die Regaleinrichtungen wahlweise eine Vielzahl an Lagerfächern (48) aufnehmen können, wobei die Regaleinrichtungen (30, 32, 34) Trennelemente zum sicheren fixieren der Lagerfächer (48) aufweisen können und wobei die Regaleinrichtungen (30, 32, 34) eine oder mehrere Schubladen-Baugruppen (54) aufnehmen können.

6. Transporter (12) nach einem der vorhergehenden Ansprüche, wobei ein Abschlusselement (26) am hinteren Ende der Lageranordnung (10) vorgesehen ist, und wobei Lagerkomponenten am Abschlusselement montierbar sind.

7. Transporter (12) nach einem der vorhergehenden Ansprüche, wobei die Lageranordnung (10) einen einen länglichen Raum zur Aufnahme länglicher Gegenstände definierenden länglichen Halter (56) aufweist, und wobei sich der längliche Halter (56) im Wesentlichen parallel zu einer zweiten Seite der Lageranordnung erstreckt, die nach hinten zu der ersten Seitenwand der Lageranordnung hin zusammenläuft.

8. Transporter (12) nach Anspruchs 7, wobei sich der längliche Halter (56) diagonal über den Ladebereich des Transporters erstreckt.

9. Transporter (12) nach Anspruch 7 oder Anspruch 8, wobei der längliche Halter (56) im unteren Teil der Lageranordnung (10) vorgesehen ist, und wobei sich der längliche Halter (56) durch die Trennwand (68) des Transporters erstrecken kann, wobei sich der längliche Halter (56) zumindest teilweise unterhalb der Beifahrersitze oder Sitze des Transporters erstreckt.

10. Transporter (12) nach Anspruch 7, wobei sich der längliche Halter (56) von der hinteren Seitenecke des Transporters aus erstreckt.

11. Transporter (12) nach einem der Ansprüche 7 bis 10, wenn abhängig von Anspruch 6, bei der sich der längliche Halter (56) durch das Abschlusselement (26) der Lageranordnung erstreckt.

12. Transporter (12) nach einem der Ansprüche 7 bis 11, wobei ein wahlweise zu öffnender Verschluss (60) am hinteren Ende des länglichen Halters vorgesehen ist, um längliche Gegenstände darin aufzubewahren.

13. Transporter (12) nach einem der Ansprüche 7 bis 12, wobei ein Fenster (72) teilweise am länglichen Halter (56) vorgesehen ist, um es zu ermöglichen jegliche darin aufbewahrte Gegenstände zu betrachten.

14. Transporter (12) nach einem der vorhergehenden Ansprüche, wobei der Transporter (12) beifahrerseitig eine Türöffnung (70) zur Ladefläche davon aufweist.

15. Transporter (12) nach einem der vorhergehenden Ansprüche, wobei der Transporter (12) eine fahrerseitige Türöffnung zur Ladefläche davon aufweist.

## Revendications

1. Van (12) incorporant un ensemble de stockage (10) monté dans le van (12), l'ensemble (10) ayant une forme trapézoïdale en vue de dessus, avec les extrémités avant et arrière (16, 22), lors de l'utilisation, sensiblement parallèle l'une par rapport à l'autre, l'ensemble de stockage étant monté dans la zone de chargement du van (12) de manière à s'étendre vers l'arrière globalement à partir de la cloison de séparation (68) du van (12) avec l'ensemble de stockage s'étendant globalement sur au moins la plus grande partie de la longueur de la zone de chargement du van (12).

2. Van (12) selon la revendication 1, dans lequel l'ensemble de stockage (10) comprend un premier côté qui, lors de l'utilisation, s'étend adjacent à et parallèle à une paroi latérale du van (12), et une seconde paroi latérale qui converge vers l'arrière en direction de la première paroi latérale, dans lequel l'ensemble de stockage peut être monté dans un van (12) avec le premier côté adjacent au côté conducteur du van, et dans lequel l'ensemble de stockage est disposé de telle sorte qu'une partie de l'ensemble de stockage est accessible à travers une porte dans le côté conducteur du van.

3. Van (12) selon la revendication 2, dans lequel le second côté de l'ensemble de stockage fournit une face contre laquelle des feuilles de matériau peuvent s'appuyer, et des moyens de fixation peuvent être prévus pour retenir les feuilles contre le second côté de l'ensemble de stockage.

4. Van (12) selon l'une quelconque des revendications précédentes, dans lequel l'ensemble de stockage comprend une pluralité de montants espacés (18, 24, 28) pouvant être montés sur le plancher du van (12), dans lequel des paires respectives de montants (18, 24, 28) sont prévues aux extrémités avant et arrière lors de l'utilisation de l'ensemble de stockage 10, et dans lequel une ou plusieurs paires de montants espacés (18, 24, 28) sont prévues entre les extrémités avant et l'arrière de l'ensemble (10).

5. Van (12) selon l'une quelconque des revendications précédentes, dans lequel l'ensemble de stockage (10) comprend une pluralité d'agencements d'étagères (30, 32, 34), dans lequel les agencements d'étagères peuvent recevoir sélectivement une pluralité de boîtes de rangement (48), dans lequel les agencements d'étagères (30, 32, 34) peuvent comprendre des séparateurs pour positionner en toute sécurité des boîtes de stockage (48) et dans lequel les agencements d'étagère (30, 32, 34) peuvent recevoir un ou plusieurs ensembles de tiroir (54).

6. Van (12) selon l'une quelconque des revendications précédentes, dans lequel un panneau d'extrémité (26) est prévu sur l'extrémité arrière de l'ensemble de stockage (10), et dans lequel des composants de stockage peuvent être montés sur le panneau d'extrémité.

7. Van (12) selon l'une quelconque des revendications précédentes, dans lequel l'ensemble de stockage (10) comprend un support allongé (56) définissant un espace allongé pour recevoir des articles allongés, et dans lequel le support allongé (56) s'étend sensiblement parallèle à un deuxième côté de l'ensemble de stockage qui converge vers l'arrière en direction d'une première paroi latérale de l'ensemble de stockage.

8. Van (12) selon la revendication 7, dans lequel le support allongé (56) s'étend en diagonale à travers la zone de chargement du van.

9. Van (12) selon les revendications 7 ou 8, dans lequel le support allongé (56) est prévu au niveau d'une partie inférieure de l'ensemble de stockage (10), dans lequel le support allongé (56) peut s'étendre à travers la cloison de séparation du van (68), dans lequel le support allongé (56) peut s'étendre au moins partiellement sous le ou les sièges du passager.

10. Van (12) selon la revendication 7, dans lequel le support allongé (56) s'étend à partir du coin arrière côté conducteur du van.

11. Van (12) selon l'une quelconque des revendications 7 à 10, lorsqu'elle dépend de la revendication 6, dans lequel le support allongé (56) s'étend à travers le panneau d'extrémité de l'ensemble de stockage (26).

12. Van (12) selon l'une quelconque des revendications 7 à 11, dans lequel une fermeture (60) pouvant être ouverte de manière sélective est prévue sur l'extrémité arrière du support allongé pour y retenir des articles allongés.

13. Van (12) selon l'une quelconque des revendications 7 à 12, dans lequel une fenêtre (72) est prévue à mi-chemin le long du support allongé (56) pour permettre de voir tous les articles qui y sont contenus.

14. Van (12) selon l'une quelconque des revendications précédentes, dans lequel le van (12) comprend une ouverture de porte côté passager (70) débouchant dans sa zone de chargement.

15. Van (12) selon l'une quelconque des revendications précédentes, dans lequel la van (12) comprend une ouverture de porte côté conducteur débouchant dans sa zone de chargement.
